# EUROPÄISCHE PATENTSCHRIFT

(11) **EP 1 537 719 B1**
(45) Veröffentlichungstag und Bekanntmachung des Hinweises auf die Patenterteilung: **09.05.2007**
(21) Anmeldenummer: 03750279.6
(22) Anmeldetag: 20.08.2003
(51) Int. Cl.: H04L 29/08, G06F 9/445

(54) **AKTUALISIERING VON AUF EINEM RECHNER EINES DATENKOMMUNIKATIONSSYSTEMS GESPEICHERTER SOFTWARE**
UPDATING OF SOFTWARE STORED IN A COMPUTER OF A DATA COMMUNICATION SYSTEM
ACTUALISATION D'UN LOGICIEL MIS EN MEMOIRE DANS UN ORDINATEUR D'UN SYSTEME DE COMMUNICATION DE DONNEES

(30) Priorität: 10.09.2002 DE 10241957
(43) Veröffentlichungstag der Anmeldung: 08.06.2005
(73) Patentinhaber: SIEMENS AKTIENGESELLSCHAFT, 80333 München (DE)
(72) Erfinder: KARNATZ, Hans-Jürgen, 58730 Fröndenberg (DE); LEIMKÖTTER, Ulrich, 45889 Gelsenkirchen (DE)
(86) Internationale Anmeldenummer: PCT/DE2003/002775
(87) Internationale Veröffentlichungsnummer: WO 2004/025924

(56) Entgegenhaltungen:
- EP-A- 0 935 373
- WO-A-00/60784
- US-A- 5 999 741
- US-B1- 6 378 069

## Beschreibung

Datenkommunikationssystem, Rechner, sowie Verfahren zur Aktualisierung von auf einem Rechner eines Datenkommunikationssystems gespeicherter Software

Die Erfindung betrifft ein Datenkommunikationssystem gemäß Oberbegriff des Anspruchs 1, einen Rechner zur Verwendung in einem derartigen Datenkommunikationssystem, sowie ein Verfahren zur Aktualisierung von auf einem Rechner eines Datenkommunikationssystems gespeicherter Software gemäß Oberbegriff des Anspruchs 22.

Die Datenübertragung über das Internet nimmt weiter an Bedeutung zu. Das Internet ist ein weltweites Datennetz, bzw. besteht - genauer - aus einer Vielzahl verschiedener, miteinander z.B. über sog. Router verbundener Datennetzwerke.

Im Internet kommunizieren jeweils ein oder mehrere zentrale Rechner - in der Literatur häufig als Server bezeichnet - mit entfernt hiervon angeordneten Clients, z.B. einem - stationären oder tragbaren - Computer, einem Telefon, etc., und/oder mit weiteren, zentralen Rechnern. Die Kommunikation erfolgt unter Verwendung von sog. Internetprotokollen, insbesondere dem TCP/IP-Protokoll (Transmission Control Protocol / Internet Protocol). Hierzu ist z.B. auf dem jeweiligen Client eine Software geladen, die das TCP/IP-Protokoll verstehen und auswerten kann (ein sog. Socket oder TCP/IP Stack).

Immer mehr private, d.h. nur von bestimmten, autorisierten Personen nutzbare Datennetzwerke beruhen auf der Technologie und dem Konzept des Internets. Derartige Datennetzwerke werden in der Literatur als Intranets bezeichnet. In einem Intranet kommuniziert - entsprechend wie beim Internet - z.B. ein entsprechender zentraler Rechner - unter Nutzung von Internetprotokollen, insbesondere dem TCP/IP-Protokoll - mit entfernt hiervon angeordneten Clients, z.B. - stationären oder tragbaren - Computern, Telefonen, etc. (und/oder mit weiteren, zentralen Rechnern). Zur Übertragung der entsprechenden Intranet-Daten werden diese jeweils in einzelne Pakete aufgeteilt, und dann - auf asynchrone Weise - versendet.

Intranets sind im Allgemeinen über den entsprechenden, zentralen Rechner mit dem Telefonnetz verbunden, können also - über das Telefonnetz - mit einem weiteren Rechner kommunizieren.

Die Datenkommunikation über das Telefonnetz kann beispielsweise auf Basis von POTS- (Plain Old Telephone Service), oder auf Basis von ISDN- (Integrated Services Digital Network) Daten-übertragungsprotokollen erfolgen. Alternativ auf Basis von xDSL- (x Digital Subscriber Line) Datenübertragungsprotokollen, z.B. mittels ADSL-Datenübertragung (ADSL = Asynchronous Digital Subscriber Line). Bei der Datenkommunikation gemäß einem xDSL-Protokoll werden mehrere Frequenzbänder verwendet, die oberhalb der zur POTS- bzw. ISDN-Datenübertragung genutzten Frequenzbänder liegen.

Soll die auf einem zentralen Intranet-Rechner geladene Software aktualisiert werden, kann ein - die Software-Aktualisierung veranlassender - weiterer Rechner über das Telefonnetz eine POTS- oder ISDN-Verbindung mit dem zentralen Intranet-Rechner aufnehmen, und dann die zur Aktualisierung notwendigen Software-Dateien an den zentralen Intranet-Rechner übertragen.

Der zentrale Intranet-Rechner - und damit auch die mit diesem verbundenen Intranet-Clients, z.B. die o.g. Computer, Telefone, etc. - (und/oder die weiteren, mit dem zentralen Intranet-Rechner verbundenen zentralen Rechner) können zusätzlich auch an das Internet angeschlossen sein. Dabei kann der entsprechende zentrale Intranet-Rechner z.B. fortwährend fest mit dem Internet verbunden (d.h. ständig "online") sein. Derartige zentrale Intranet-Rechner bzw. die an sie angeschlossenen Intranet-Clients verfügen in der Regel über permanente - aus einer mehr-stelligen Zahl bestehende - IP-Adressen (Internet Protocol-Adresse). Über die entsprechende Adresse können andere - an das Internet angeschlossene - Rechner mit dem zentralen Intranet-Rechner Verbindung aufnehmen, bzw. mit den mit diesem verbundenen Intranet-Clients.

Andere zentrale Intranet-Rechner sind nicht fortwährend an das Internet angeschlossen (d.h. nicht ständig "online"). Diese Rechner - bzw. die an sie angeschlossenen Intranet-Clients - können dann, wenn sie (z.B. unter Verwendung eines POTS-, ISDN- oder xDSL- Datenübertragungsprotokolls) - beispielsweise unter Zwischenschaltung eines entsprechenden zentralen Rechners eines Internet-Providers - eine Verbindung zum Internet aufnehmen, eine vom jeweiligen zentralen (oder einem beliebigen anderen) Rechner zugeteilte, temporäre IP-Adresse erhalten. In diesem Fall ist also - anders als z.B. bei herkömmlichen Telefonnetzen - keine feste Zuordnung zwischen dem jeweiligen Gerät (hier: dem entsprechenden zentralen Rechner bzw. Intranet-Client), und der Ruf-Kennung (hier: einer aus einer mehr-stelligen Zahl bestehenden IP-Adresse) gegeben.

Aus der EP-A-0 935 373 ist Verfahren zum Übertragen von Daten von einem Server zu einem Teilnehmer in einem LAN bekannt, bei dem vor der Übertragung ein Pfad-Server GARP im LAN kontaktiert wird, um den besten Pfad vom Server zum Teilnehmer zu ermitteln. Der Pfad-Server teilt dem Server mit, welcher Pfad zum Teilnehmer eingerichtet werden soll.

Aus der US 637 8069 ist ein System und ein Verfahren zur Aktualisierung von Software in einem Teilnehmerendgerät bekannt, wobei eine Verbindung zwischen einem Server und dem gerät eingerichtets wird, über die nachfolgend ein zweites, die aktualisierte software enthaltendes signal übermittelt wird.

Die Erfindung hat zur Aufgabe, ein neuartiges Datenkommunikationssystem, einen neuartigen Rechner, sowie ein neuartiges Verfahren zur Aktualisierung von auf einem Rechner eines Datenkommunikationssystems gespeicherter Software zur Verfügung zu stellen.

Die Erfindung erreicht dieses und weitere Ziele durch die Gegenstände der Ansprüche 1, 21 und 22.

Vorteilhafte Weiterbildungen der Erfindung sind in den Unteransprüchen angegeben.

Gemäß einem Grundgedanken der Erfindung wird ein Datenkommunikationssystem mit mehreren Rechnern, und einem Administrations-Rechner bereitgestellt, wobei vor der Aktualisierung bzw. dem Update von auf einem der Rechner bzw. einer diesem zugeordneten Speichereinrichtung gespeicherter Software Daten zwischen dem jeweiligen Rechner und dem Administrations-Rechner ausgetauscht werden, die angeben, welches Übertragungsmedium zum Austausch von zur Aktualisierung bzw. zur Steuerung der Aktualisierung verwendeten Daten verwendet werden soll. Nachfolgend wird über das zu verwendende Übertragungsmedium eine Verbindung zwischen dem jeweiligen Rechner und dem zusätzlichen Server-Rechner aufgebaut, wobei auf dem zusätzlichen Server-Rechner bzw. auf einer diesem zugeordneten Speichereinrichtung mindestens eine Datei gespeichert ist, die zur Aktualisierung der Daten benötigt wird.

Vorteilhaft wird durch den jeweiligen Rechner bzw. eine spezielle, auf dem jeweiligen Rechner bzw. der diesem zugeordneten Speichereinrichtung gespeicherte Software-Aktualisierungs-Steuersoftware ermittelt, welches Übertragungsmedium zum Austausch der zur Aktualisierung bzw. zur Steuerung der Aktualisierung verwendeten Daten verwendet werden soll.

Dadurch können die zur Aktualisierung bzw. zur Steuerung der Aktualisierung verwendeten Daten - adaptiv - jeweils über das (momentan) optimale Übertragungsmedium übertragen werden, insbesondere unter Nutzung desjenigen Kommunikationswegs, über den (momentan) die höchste Datenrate erzielt werden kann.

Im Folgenden wird die Erfindung anhand eines Ausführungsbeispiels und der beigefügten Zeichnung näher erläutert.

Dabei zeigt:

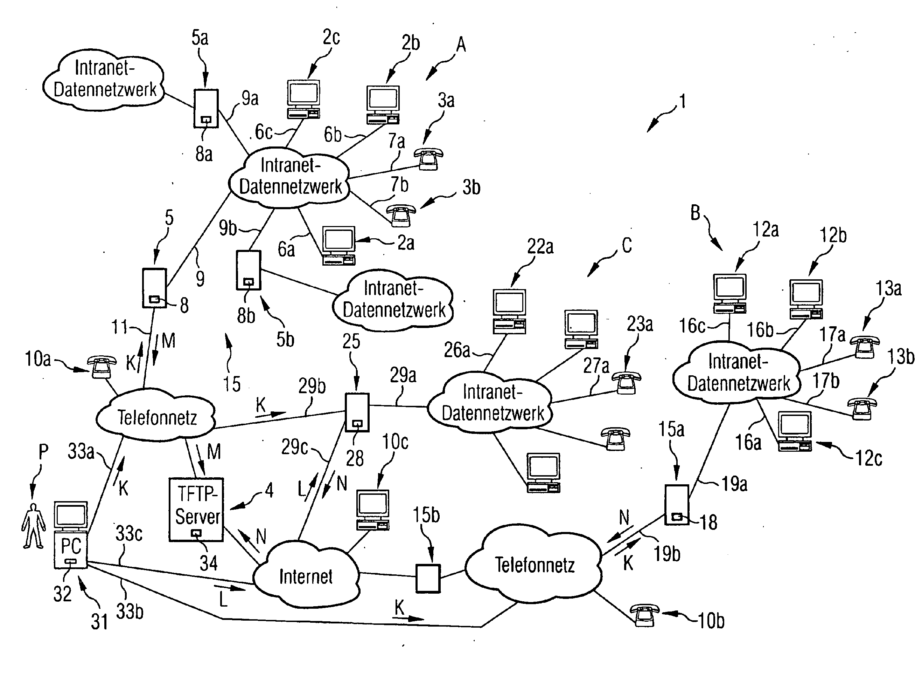

- Fig. 1:: eine schematische Darstellung eines Datenkommunikationssystems gemäß einem Ausführungsbeispiel der Erfindung.

Bei dem in Fig. 1 gezeigten Datenkommunikationssystem 1 sind eine Vielzahl von Clients 2a, 2b, 2c, 3a, 3b - im vorliegenden Ausführungsbeispiel mehrere Telefone 3a, 3b und mehrere Rechner 2a, 2b, 2c - an ein erstes Intranet-Datennetzwerk A angeschlossen.

Das erste Intranet-Datennetzwerk A weist eine Telekommunikationsanlage bzw. einen als Telekommunikationsanlage fungierenden zentralen Rechner 5 auf, der für die Clients 2a, 2b, 2c, 3a, 3b als Kommunikations-Steuerungs-Einrichtung fungiert, insbesondere als Telefon-Vermittlungsanlage, um das erste Intranet-Datennetzwerk A (bzw. die daran angeschlossenen Clients 2a, 2b, 2c, 3a, 3b) mit einem Telefonnetz (z.B. mit dem öffentlichen Telefonnetz) zu verbinden.

Hierzu ist auf einer Speichereinrichtung 8 des zentralen Rechners 5 auf an sich bekannte Weise eine Kommunikations-Steuerungs-Software geladen.

Der Anschluss des zentralen Rechners 5 bzw. der Clients 2a, 2b, 2c, 3a, 3b an das erste Intranet-Datennetzwerk A erfolgt mittels - an ein entsprechendes Bussystem angeschlossener - Leitungen 6a, 6b, 6c, 7a, 7b, 9.

Die Clients 2a, 2b, 2c, 3a, 3b und der zentrale Rechner 5 kommunizieren unter Verwendung von Internetprotokollen, z.B. dem Transmission Control Protocol (TCP) bzw. dem Internet Protocol (IP). Hierzu ist auf dem jeweiligen Client 2a, 2b, 2c, 3a, 3b bzw. auf dem zentralen Rechner 5 eine Software (ein sogenannter Stack) geladen, die das entsprechende Internetprotokoll verstehen und auswerten kann.

Zur Übertragung von Daten zwischen den Clients 2a, 2b, 2c, 3a, 3b und dem zentralen Rechner 5 über das erste Intranet-Datennetzwerk A werden die Daten - wie bei Internet-Protokollen üblich - in einzelne Pakete aufgeteilt.

Kommuniziert einer der Clients 2a, 2b, 2c, 3a, 3b - über das Telefonnetz - mit einem externen, nicht direkt an das erste Intranet-Datennetzwerk A angeschlossenen Gerät (im vorliegenden Ausführungsbeispiel mit dem Telefon 10a) werden die Daten vom zentralen Rechner 5 in entsprechende POTS- oder ISDN-Daten umgesetzt, und über eine Leitung 11 an das Telefonnetz ausgegeben. Umgekehrt werden die vom Telefon 10a über das Telefonnetz empfangenen POTS- bzw. ISDN-Daten vom zentralen Rechner 5 auf die o.g. Weise über das erste Intranet-Datennetzwerk A an den jeweiligen Client 2a, 2b, 2c, 3a, 3b weitergeleitet.

Wie in der Figur weiter gezeigt ist, weist das Datenkommunikationssystem 1 - abgesehen vom ersten Intranet-Datennetzwerk A - noch eine Vielzahl weiterer Intranet-Datennetzwerke auf. Im vorliegenden Ausführungsbeispiel ist ein zweites Intranet-Datennetzwerk B und ein drittes Intranet-Datennetzwerk C dargestellt.

Das zweite Intranet-Datennetzwerke B weist - entsprechend wie das erste Intranet-Datennetzwerk A - eine Vielzahl von Clients 12a, 12b, 12c, 13a, 13b - im vorliegenden Ausführungsbeispiel Telefone 13a, 13b und Rechner 12a, 12b, 12c auf.

Das zweite Intranet-Datennetzwerk B kann außer an ein Telefonnetz zusätzlich noch an das Internet angeschlossen werden. Der Anschluss an das Internet erfolgt indirekt über das Telefonnetz und einen Rechner 15b eines Internet-Service-Providers (kurz ISP).

Das zweite Intranet-Datennetzwerk B weist eine Telekommunikationsanlage bzw. einen zentralen Rechner 15a auf, der für die Clients 12a, 12b, 12c, 13a, 13b als Kommunikations-Steuerungs-Einrichtung fungiert, insbesondere als Vermittlungsanlage, um das zweite Intranet-Datennetzwerk B (bzw. die daran angeschlossenen Clients 12a, 12b, 12c, 13a, 13b) mit dem Telefonnetz zu verbinden. Des weiteren verbindet der zentrale Rechner 15a das zweite Intranet-Datennetzwerk B unter Zwischenschaltung des Telefonnetzes mit dem Internet. Der zentrale Rechner 15a ist dabei nicht permanent an das Internet angeschlossen, d.h. nicht ständig "online".

Zur Steuerung der Kommunikation zwischen den Clients 12a, 12b, 12c, 13a, 13b und dem Telefonnetz bzw. - bei Bedarf - mit dem Internet ist auf einer Speichereinrichtung 18 des Rechners 15a auf an sich bekannte Weise eine Kommunikations-Steuerungs-Software geladen.

Der Anschluss des zentralen Rechners 15a bzw. der Clients 12a, 12b, 12c, 13a, 13b an das zweite Intranet-Datennetzwerk B erfolgt mittels - an ein entsprechendes Bussystem angeschlossener - Leitungen 16a, 16b, 16c, 17a, 17b, 19a.

Die Clients 12a, 12b, 12c, 13a, 13b und der zentrale Rechner 15a kommunizieren unter Verwendung von Internetprotokollen, z.B. dem Transmission Control Protocol (TCP) bzw. dem Internet Protocol (IP). Hierzu ist auf dem jeweiligen Client 12a, 12b, 12c, 13a, 13b bzw. auf dem zentralen Rechner 15a eine Software (ein sogenannter Stack) geladen, die das entsprechende Internetprotokoll verstehen und auswerten kann.

Kommuniziert einer der Clients 12a, 12b, 12c, 13a, 13b mit einem externen, nicht direkt an das zweite Intranet-Datennetzwerk B, jedoch ans Telefonnetz angeschlossenen Gerät (im vorliegenden Ausführungsbeispiel einem Telefon 10b) werden die Daten vom zentralen Rechner 15a in entsprechende POTS- oder ISDN-Daten umgesetzt und über eine Leitung 19b an das Telefonnetz ausgegeben. Umgekehrt werden die vom Telefon 10b über das Telefonnetz empfangenen POTS- bzw. ISDN-Daten vom zentralen Rechner 15a auf die o.g. Weise über das zweite Intranet-Datennetzwerk B an den jeweiligen Client 12a, 12b, 12c, 13a, 13b weitergeleitet.

Soll demgegenüber einer der Clients 12a, 12b, 12c, 13a, 13b mit einem an das Internet angeschlossenen Gerät (im vorliegenden Ausführungsbeispiel mit einem Computer 10c) kommunizieren, wird vom zentralen Rechner 15a eine Telefonverbindung (z.B. eine POTS-, ISDN-, oder xDSL-, insbesondere ADSL-Verbindung) zum ISP-Rechner 15b hergestellt, der dann dem zentralen Rechner 15a bzw. dem jeweiligen Client 12a, 12b, 12c, 13a, 13b eine temporäre IP-Adresse zuordnet. Des weiteren veranlasst der ISP-Rechner 15b den Aufbau einer entsprechenden Internetverbindung, so dass über das Internet und das Telefonnetz - unter Zwischenschaltung des ISP-Rechners 15b und des zentralen Intranet-Rechners 15a - Daten zwischen dem jeweiligen Client 12a, 12b, 12c, 13a, 13b und dem Computer 10c ausgetauscht werden können.

Durch die Verwendung temporärer - statt fest einem bestimmten zentralen Rechner bzw. Client zugeordneter - IP-Adressen wird die Zahl der IP-Adressen reduziert, die der ISP-Rechner 15b zu verwalten hat.

Wie in der Figur weiter gezeigt ist, weist das dritte Intranet-Datennetzwerk C - entsprechend wie das erste und zweite Intranet-Datennetzwerk A, B - eine Vielzahl von Clients 22a, 23a auf - im vorliegenden Ausführungsbeispiel ein Telefon 23a, und ein Rechner 22a.

Das dritte Intranet-Datennetzwerk C ist an das Telefonnetz und zusätzlich an das Internet angeschlossen. Im Unterschied zum zweiten Intranet-Datennetzwerk B ist das dritte Intranet-Datennetzwerk C direkt und fortwährend mittels einer entsprechenden Standleitung 29c an das Internet angeschlossen.

Das dritte Intranet-Datennetzwerk C weist eine Telekommunikationsanlage bzw. einen als Telekommunikationsanlage fungierenden zentralen Rechner 25 auf, der für die Clients 22a, 23a als Kommunikations-Steuerungs-Einrichtung fungiert, insbesondere als Vermittlungsanlage, um das Intranet-Datennetzwerk (bzw. die daran angeschlossenen Clients 22a, 23a) mit dem Telefonnetz oder dem Internet zu verbinden. Der zentrale Rechner 25 ist über die Standleitung 29c permanent an das Internet angeschlossen (d.h. ständig "online").

Auf einer Speichereinrichtung 28 des Rechners 25 ist auf an sich bekannte Weise eine Kommunikations-Steuerungs-Software geladen.

Der Anschluss des zentralen Rechners 25 bzw. der Clients 22a, 23a an das dritte Intranet-Datennetzwerk C erfolgt mittels - an ein entsprechendes Bussystem angeschlossener - Leitungen 26a, 27a, 29a.

Die Clients 22a, 23a und der zentrale Rechner 25 kommunizieren unter Verwendung von Internetprotokollen, z.B. dem Transmission Control Protocol (TCP) bzw. dem Internet Protocol (IP). Hierzu ist auf dem jeweiligen Client 22a, 23a bzw. auf dem zentralen Rechner 25 eine Software (ein sogenannter Stack) geladen, die das entsprechende Internetprotokoll verstehen und auswerten kann.

Kommuniziert einer der Clients 22a, 23a mit einem externen, nicht direkt ans Intranet-Datennetzwerk, jedoch ans Telefonnetz angeschlossenen Gerät (im vorliegenden Ausführungsbeispiel mit dem Telefon 10a) werden die Daten vom zentralen Rechner 25 in entsprechende POTS- oder ISDN-Daten umgesetzt, und über eine Leitung 29b an das Telefonnetz ausgegeben. Umgekehrt werden die vom Telefon 10a über das Telefonnetz empfangenen POTS- bzw. ISDN-Daten vom zentralen Rechner 25 auf die o.g. Weise über das dritte Intranet-Datennetzwerk C an den jeweiligen Client 22a, 23a weitergeleitet.

Der zentrale Intranet-Rechner 25 bzw. die an ihn angeschlossenen Clients 22a, 23a verfügen über eine permanente - aus einer mehr-stelligen Zahl bestehende - IP-Adresse, so dass nach einem Aufbau der entsprechenden Internet-Verbindung Daten zwischen einem an das Internet angeschlossenen Gerät (z.B. dem Computer 10c) und dem zentralen Rechner 25 ausgetauscht werden können, bzw. - unter Zwischenschaltung des Rechners 25 - zwischen dem Gerät, (z.B. dem Computer 10c) und dem jeweiligen Client 22a, 23a.

Zur Aktualisierung der auf den Speichereinrichtungen 8, 18, 28 der zentralen Rechner 5, 15a, 25 gespeicherten Kommunikations-Steuerungs-Software (oder einer beliebigen anderen, auf den entsprechenden Speichereinrichtungen 8, 18, 28 abgespeicherten Software) ist im vorliegenden Ausführungsbeispiel ein Administrations-Rechner 31 (hier: ein PC (Personal Computer)) und ein Server-Rechner 4 (hier: ein TFTP-Server-Rechner (TFTP = Trivial File Transfer Protocol)) vorgesehen. Statt eines TFTP-Server-Rechner kann auch ein beliebiger anderer Server-Rechner verwendet werden, z.B. ein gewöhnlicher Web-Server-Rechner, insbesondere ein HTTP- bzw. HTTPS-Server-Rechner.

Der Server-Rechner 4 und/oder der Administrations-Rechner 31 können entfernt voneinander, und/oder entfernt von einigen oder sämtlichen der zentralen Rechner 5, 15a, 25 angeordnet sein.

Die Aktualisierung der Software auf den zentralen Rechnern 5, 15a, 25 - insbesondere der Austausch der hierzu erforderlichen Daten - erfolgt beim dargestellten Datenkommunikationssystem 1 auf adaptive - insbesondere auf eine eine möglichst hohe Datenübertragungsrate gewährleistende - Weise.

Wie aus der Figur und Beschreibung ersichtlich, sind sämtliche zentralen Rechner 5, 15a, 25 über das Telefonnetz - d.h. über eine dem jeweiligen Rechner 5, 15a, 25 fest zugeordnete Rufkennung (hier: eine Telefonnummer) - erreichbar. Dagegen sind nur einige der zentralen Rechner - nämlich die zentralen Rechner 15a und 25 über das Internet erreichbar.

Auf einer Speichereinrichtung 32 des Administrations-Rechners 31 ist eine Liste derjenigen zentralen Rechner 5, 15a, 25, bzw. die diesen zugeordneten Rufkennungen gespeichert, deren Software - veranlasst vom Administrations-Rechner 31 aus - aktualisierbar ist.

Beim vorliegenden Ausführungsbeispiel ist der Administrations-Rechner 31 über entsprechende Leitungen 33a, 33b, 33c mit dem Telefonnetz, und (temporär oder stationär) mit dem Internet verbunden.

Durch entsprechende Auswahl-Eingaben am Administrations-Rechner 31 durch einen Benutzer P kann der jeweilige zentrale Rechner 5, 15a, 25 ausgewählt werden, für den eine Software-Aktualisierung durchgeführt werden soll. Daraufhin wird - veranlasst durch den Administrations-Rechner 31 - automatisch eine Telefonverbindung, insbesondere eine POTS- oder ISDN-Telefonverbindung zum ausgewählten zentralen Rechner 5, 15a, 25 hergestellt. Dies erfolgt durch Anwahl der dem jeweiligen Rechner 5, 15a, 25 zugeordneten, in der Liste enthaltenen Telefonnummer.

Auf den entsprechenden Speichereinrichtungen 8, 18, 18 der zentralen Rechner 5, 15a, 25 ist eine - spezielle, separate - Software-Aktualisierungs-Steuersoftware gespeichert. Alternativ kann die Software-Aktualisierungs-Steuersoftware z.B. auch in andere, auf der jeweiligen Speichereinrichtung 8, 18, 18 gespeicherte Software-Komponenten, z.B. in die Kommunikations-Steuerungs-Software integriert sein.

Ist eine Telefonverbindung zwischen dem jeweiligen zentralen Rechner 5, 15a, 25 und dem Administrations-Rechner 31 hergestellt (siehe Schritt K bzw. Pfeil K), wird die Software-Aktualisierungs-Steuersoftware gestartet. Diese ermittelt dann, welche Kommunikationswege dem jeweiligen zentralen Rechner 5, 15a, 25 - momentan - zur Verfügung stehen. Beispielsweise kann der zentrale Rechner (wie z.B. beim zentralen Rechner 5 der Fall) lediglich zur Kommunikation über eine entsprechende - hier über die Leitung 11 geführte - Telefonverbindung ausgelegt bzw. eingerichtet sein. Alternativ kann der entsprechende zentrale Rechner (wie z.B. beim zentralen Rechner 25 der Fall) zusätzlich mit dem Internet verbunden sein, d.h. so ausgelegt bzw. eingerichtet sein, dass er - permanent - über eine entsprechende Internetverbindung kommunizieren kann.

Auch ist möglich, dass der entsprechende zentrale Rechner (wie z.B. beim zentralen Rechner 15a der Fall) zur Kommunikation über eine entsprechende Telefonverbindung ausgelegt bzw. eingerichtet ist, und zusätzlich mit dem Internet verbindbar ist, momentan aber nicht an das Internet angeschlossen ist ("offline"-Zustand). Der entsprechende zentrale Rechner kann dann momentan nicht über das Internet kommunizieren. In diesem Fall kann von der Software-Aktualisierungs-Steuersoftware veranlasst werden, dass der zentrale Rechner 15a umgehend an das Internet angeschlossen wird.

Des weiteren kann der entsprechende zentrale Rechner (wie z.B. beim zentralen Rechner 15a der Fall) zur Kommunikation über eine entsprechende Telefonverbindung ausgelegt bzw. eingerichtet sein, und momentan (aber nicht fortwährend) "online", d.h. mit dem Internet verbunden sein (oder auf die oben beschriebene Weise veranlasst durch die Software-Aktualisierungs-Steuersoftware in einen solchen Zustand gebracht werden). Der entsprechende zentrale Rechner kann dann - momentan - über eine entsprechende Internetverbindung kommunizieren.

Nach der Ermittlung der dem jeweiligen zentralen Rechner 5, 15a, 25 momentan zur Verfügung stehenden Kommunikationswege wird - falls ermittelt wird, dass mehrere Kommunikationswege zur Verfügung stehen - von der Software-Aktualisierungs-Steuersoftware einer der ermittelten Kommunikationswege ausgewählt - insbesondere derjenige, über den momentan die höchste Datenrate erzielt werden kann.

Das Ergebnis der Ermittlung wird dann - veranlasst durch die Software-Aktualisierungs-Steuersoftware - mittels entsprechender, über die zwischen dem jeweiligen zentralen Rechner 5, 15a, 25 und dem Administrations-Rechner 31 bestehende Telefonverbindung ausgetauschter Daten dem Administrations-Rechner 31 mitgeteilt. Insbesondere erfolgt dies mittels Daten, die die Art des ausgewählten Kommunikationswegs (POTS-Telefon- bzw. ISDN-Telefon-Verbindung / feste IP-Verbindung / temporäre IP-Verbindung) kennzeichnen, und/oder mittels Daten, die die dem ausgewählten Kommunikationsweg zugeordnete Rufkennung (Telefonnummer / feste IP-Adresse / temporäre IP-Adresse) kennzeichnen.

Entspricht der ausgewählte Kommunikationsweg nicht dem momentan zur Kommunikation zwischen dem jeweiligen zentralen Rechner 5, 15a, 25 und dem Administrations-Rechner 31 verwendeten Kommunikationsweg (d.h. der o.g. Telefonverbindung), wird veranlasst durch den Administrations-Rechner 31 oder alternativ veranlasst durch den jeweiligen zentralen Rechner 5, 15a, 25 eine neue Verbindung zwischen dem Administrations-Rechner 31 und dem jeweiligen zentralen Rechner 25 aufgebaut. Beispielsweise wird unter Nutzung der übermittelten (festen oder temporären) IP-Adresse eine Internetverbindung (siehe Schritt L bzw. Pfeil L) aufgebaut.

Über den ausgewählten Kommunikationsweg d.h. entweder über den neuen Kommunikationsweg oder - falls der ursprüngliche Kommunikationsweg dem ausgewählten Kommunikationsweg entspricht - über den ursprünglich zwischen dem jeweiligen zentralen Rechner 5, 15a, 25 und dem Administrations-Rechner 31 bestehenden Kommunikationsweg werden dann zwischen dem jeweiligen zentralen Rechner 5, 15a, 25 und dem Administrations-Rechner 31 weitere, die Steuerung des Aktualisier-Vorgangs der auf der Speichereinrichtung 8, 18, 28 des jeweiligen zentralen Rechners 5, 15a, 25 gespeicherten (Kommunikations-Steuerungs-)Software betreffende Daten ausgetauscht.

Diese (Aktualisier-Vorgang-Steuer-)Daten können angeben:
- den genauen Zeitpunkt, zu dem die Aktualisierung vorgenommen werden soll, und/oder
- die momentan auf der jeweiligen Speichereinrichtung 8, 18, 28 gespeicherte (Kommunikations-Steuerungs-)Software-Version, und/oder
- eine Information darüber, ob die gesamte (Kommunikations-Steuerungs-)Software, oder nur einzelne Komponenten der (Kommunikations-Steuerungs-)Software aktualisiert werden sollen, bzw. welche Komponenten aktualisiert werden sollen, und/oder
- den Kommunikationsweg, über den mit dem Server-Rechner 4 kommuniziert werden soll (dieser Kommunikationsweg kann z.B. dem ausgewählten Kommunikationsweg entsprechen), und/oder
- abhängig vom jeweils angegebenen Kommunikationsweg die entsprechende Rufkennung des Server-Rechners 4, insbesondere dessen Telefonnummer, IP-Adresse oder URL, und/oder,
- den Pfad bzw. den oder die Dateinamen, unter denen - auf dem Server-Rechner 4 - die entsprechenden Dateien gespeichert sind, die zur Aktualisierung der (Kommunikations-Steuerungs-)Software benötigt werden.

Ein Teil der (Aktualisier-Vorgang-Steuer-)Daten - z.B. diejenigen Daten, die angeben, welche Software-Komponenten genau aktualisiert werden sollen - kann vom Benutzer P am Administrations-Rechner 31 eingegeben bzw. ausgewählt werden - insbesondere (bei Übertragung der Daten über das Internet) durch entsprechende Eingaben an einem dort angezeigten Browser.

Andere (Aktualisier-Vorgang-Steuer-)Daten können z.B. auf der Speichereinrichtung 32 des Administrations-Rechners 31 vorab abgespeichert sein - oder durch eine entsprechende, auf der Speichereinrichtung 32 des Administrations-Rechners 31 abgespeicherte Steuer-Software ermittelt werden - (z.B. die entsprechende Rufkennung, insbesondere Telefonnummer oder IP-Adresse bzw. URL des Server-Rechners 4), und/oder können auf der jeweiligen Speichereinrichtung 8, 18, 28 des entsprechenden zentralen Rechners 5, 15a, 25 vorab abgespeichert sein - oder durch die auf der jeweiligen Speichereinrichtung 8, 18, 28 des entsprechenden zentralen Rechners 5, 15a, 25 gespeicherte Software-Aktualisierungs-Steuersoftware ermittelt werden - (z.B. die den zur Kommunikation mit dem Server-Rechner 4 zu verwendenden Kommunikationsweg kennzeichnenden Daten).

Daraufhin wird - veranlasst durch den jeweiligen zentralen Rechner 5, 15a, 25, insbesondere die Software-Aktualisierungs-Steuersoftware - über den ausgewählten Kommunikationsweg eine Verbindung zwischen dem jeweiligen zentralen Rechner 5, 15a, 25 und dem Server-Rechner 4 aufgebaut. Beispielsweise erfolgt dies ausgehend vom zentralen Rechner 15a oder 25 - unter Nutzung der vom Administrations-Rechner 31 übermittelten IP-Adresse bzw. URL - (siehe Schritt N bzw. Pfeil N), oder ausgehen vom zentralen Rechner 5 - unter Nutzung der vom Administrations-Rechner 31 übermittelten Telefonnummer (siehe Schritt M bzw. Pfeil M).

Nach dem Aufbau der entsprechenden Verbindung werden weitere (Aktualisier-Vorgang-Steuer-)Daten zwischen dem jeweiligen zentralen Rechner 5, 15a, 25, und dem Server-Rechner 4 ausgetauscht. Die weiteren (Aktualisier-Vorgang-Steuer-)Daten können z.B. den Pfad bzw. den oder die Dateinamen der Datei bzw. Dateien angeben, die zur Aktualisierung der (Kommunikations-Steuerungs-)Software an den jeweiligen zentralen Rechner 5, 15a, 25 übertragen werden sollen, und/oder den genauen Zeitpunkt, zu dem die entsprechenden Dateien übermittelt werden sollen.

Die entsprechende(n) - z.B. auf einer Speichereinrichtung 34 des Server-Rechners 4 gespeicherte(n) - Datei(en) wird bzw. werden dann über die entsprechende Verbindung an den jeweiligen zentralen Rechner 5, 15a, 25 übertragen. Dort wird - gesteuert durch die Software-Aktualisierungs-Steuersoftware - unter Verwendung der vom Server-Rechner 4 übermittelten Datei(en) auf an sich bekannte Weise eine Aktualisierung der (Kommunikations-Steuerungs-)Software vorgenommen.

Daraufhin werden - z.B. veranlasst durch die Software-Aktualisierungs-Steuersoftware - den Status der Aktualisierung kennzeichnende Daten (z.B. Daten, die angeben, ob die Aktualisierung erfolgreich vorgenommen werden konnte, oder nicht) über die zwischen dem jeweiligen zentralen Rechner 5, 15a, 25 und dem Administrations-Rechner 31 bestehende (oder alternativ über eine dann neu aufgebaute) Verbindung vom jeweiligen zentralen Rechner 5, 15a, 25 an den Administrations-Rechner 31 übermittelt. Dies erfolgt unter Nutzung einer Administrations-Rechner-Aktualisierungs-Status-Übermittlungs-Zieladresse, die - als Teil der (Aktualisier-Vorgang-Steuer-) Daten - vorab vom Administrations-Rechner 31 an den jeweiligen zentralen Rechner 5, 15a, 25 übermittelt worden ist.

Bei einem alternativen Ausführungsbeispiel kann eines oder mehrere der Intranet-Datennetzwerke A, B, C über entsprechende Leitungen und entsprechende, weitere zentrale Rechner (hier z.B. das Intranet-Datennetzwerk A über Leitungen 9a, 9b und weitere zentrale Rechner 5a, 5b) mit weiteren Intranet-Datennetzwerken verbunden sein, d.h. mit diesen zu einem Netzwerkverbund zusammengeschlossen sein.

Auf entsprechenden Speichereinrichtungen 8a, 8b der weiteren zentralen Rechnern 5a, 5b ist eine Kommunikations-Steuerungs-Software abgespeichert, die der auf der Speichereinrichtung 8 des zentralen Rechners 5 abgespeicherten Kommunikations-Steuerungs-Software entspricht, bzw. zu dieser identisch ist.

Der jeweilige zentrale Rechner (hier der zentrale Rechner 5) - bzw. die auf dessen Speichereinrichtung 8 gespeicherte Software-Aktualisierungs-Steuersoftware - kann dann mit Hilfe entsprechender, über die Leitungen 9a bzw. 9b mit den weiteren zentralen Rechnern 5a, 5b ausgetauschter Daten veranlassen, dass die auf den Speichereinrichtungen 8a, 8b der weiteren zentralen Rechner 5a, 5b gespeicherte Kommunikations-Steuerungs-Software entsprechend aktualisiert wird, wie - vorher - die auf der Speichereinrichtung 8 des zentralen Rechners 5 gespeicherte Kommunikations-Steuerungs-Software. Dies erfolgt indem der zentrale Rechner 5 die entsprechende(n), auf der Speichereinrichtung 34 des Server-Rechners 4 gespeicherte(n), zur Aktualisierung benötigte(n) Datei(en) an die weiteren zentralen Rechner 5a, 5b weiterleitet, wo - unter Verwendung der vom zentralen Rechner 5 übermittelten Datei(en) - auf an sich bekannte Weise eine Aktualisierung der auf der entsprechenden Speichereinrichtung 8a, 8b abgespeicherten Kommunikations-Steuerungs-Software vorgenommen wird.

## Patentansprüche

1. Datenkommunikationssystem (1) mit mehreren Rechnern (5, 15a, 25), einem Administrations-Rechner (31) und einem zusätzlichen Server-Rechner (4),
wobei die Rechner und der Administrations - Rechner so ausgestaltet und eingerichtet sind
dass vor der Aktualisierung von auf einem der Rechner (5, 15a, 25) bzw. einer diesem zugeordneten Speichereinrichtung (8, 18, 28) gespeicherter Software Daten zwischen dem jeweiligen Rechner (5, 15a, 25) und dem Administrations-Rechner (31) ausgetauscht werden, die angeben, welches Übertragungsmedium zum Austausch von zur Aktualisierung bzw. zur Steuerung der Aktualisierung verwendeten Daten verwendet werden soll, und
**dadurch gekennzeichnet dass** die Rechner und der zusäbliche Server-Rechner so ausgestaltet und eingerichtet sind
dass nachfolgend über das zu verwendende Übertragungsmedium eine Verbindung zwischen dem jeweiligen Rechner (5, 15a, 25) und dem zusätzlichen Server-Rechner (4) aufgebaut wird, und dass auf dem zusätzlichen Server-Rechner (4), bzw. auf einer diesem zugeordneten Speichereinrichtung (34) mindestens eine Datei gespeichert ist, die zur Aktualisierung der Daten benötigt wird.

2. Datenkommunikationssystem (1) nach Anspruch 1,
**dadurch gekennzeichnet,**
**dass** die Daten, die angeben, welches Übertragungsmedium zum Austausch von zur Aktualisierung bzw. zur Steuerung der Aktualisierung verwendeten Daten verwendet werden soll, über ein vorbestimmtes Übertragungsmedium ausgetauscht werden, welches sich von dem angegebenen Übertragungsmedium unterscheiden kann.

3. Datenkommunikationssystem (1) nach Anspruch 2,
**dadurch gekennzeichnet,**
**dass** das vorbestimmte Übertragungsmedium eine zwischen dem Administrations-Rechner (31), und dem jeweiligen Rechner (5, 15a, 25) hergestellte Telefon-Verbindung ist.

4. Datenkommunikationssystem (1) nach einem der vorhergehenden Ansprüche,
**dadurch gekennzeichnet,**
**dass** das angegebene Übertragungsmedium eine Internet-Verbindung ist.

5. Datenkommunikationssystem (1) nach Anspruch 4,
**dadurch gekennzeichnet,**
**dass** das angegebene Übertragungsmedium eine feste Internet-Verbindung ist, und die dem jeweiligen Rechner (5, 15a, 25) zugeordnete IP- Adresse eine permanente, dem jeweiligen Rechner (5, 15a, 25) fest zugeordnete IP- Adresse ist.

6. Datenkommunikationssystem (1) nach Anspruch 4,
**dadurch gekennzeichnet,**
**dass** das angegebene Übertragungsmedium eine temporäre Internet-Verbindung ist, und die dem jeweiligen Rechner (5, 15a, 25) zugeordnete IP- Adresse eine temporäre, dem jeweiligen Rechner (5, 15a, 25) nicht fest zugeordnete IP-Adresse ist.

7. Datenkommunikationssystem (1) nach einem der vorhergehenden Ansprüche,
**dadurch gekennzeichnet,**
**dass** das angegebene Übertragungsmedium eine Telefon-Verbindung ist.

8. Datenkommunikationssystem (1) nach einem der vorhergehenden Ansprüche,
**dadurch gekennzeichnet,**
**dass** durch den jeweiligen Rechner (5, 15a, 25) ermittelt wird, welches Übertragungsmedium zum Austausch der zur Aktualisierung bzw. zur Steuerung der Aktualisierung verwendeten Daten verwendet werden soll.

9. Datenkommunikationssystem (1) nach einem der vorhergehenden Ansprüche,
**dadurch gekennzeichnet,**
**dass** der zusätzliche Server-Rechner (4) ein TFTP- Server-Rechner oder ein Web-Server-Rechner ist.

10. Datenkommunikationssystem (1) nach einem der vorhergehenden Ansprüche,
**dadurch gekennzeichnet,**
**dass** über das vorbestimmte oder das angegebene Übertragungsmedium Software-Aktualisierungs-Steuerdaten zwischen dem jeweiligen Rechner (5, 15a, 25), und dem Administrations-Rechner (31) ausgetauscht werden.

11. Datenkommunikationssystem (1) nach Anspruch 10,
**dadurch gekennzeichnet,**
**dass** die Software-Aktualisierungs-Steuerdaten den genauen Zeitpunkt angeben, zu dem die Aktualisierung vorgenommen werden soll.

12. Datenkommunikationssystem (1) nach Anspruch 10 oder 11,
**dadurch gekennzeichnet,**
**dass** die Software-Aktualisierungs-Steuerdaten eine dem zusätzlichen Server-Rechner (4) zugeordnete Rufkennung, insbesondere Telefon-Nummer oder IP- bzw. URL-Adresse angeben.

13. Datenkommunikationssystem (1) nach einem der Ansprüche 10 bis 12,
**dadurch gekennzeichnet,**
**dass** mit Hilfe der Software-Aktualisierungs-Steuerdaten übermittelt wird, welches Übertragungsmedium zum Austausch von Daten zwischen dem jeweiligen Rechner (5, 15a, 25) und dem zusätzlichen Rechner (4) verwendet werden soll.

14. Datenkommunikationssystem (1) nach einem der vorhergehenden Ansprüche,
**dadurch gekennzeichnet,**
**dass** das zum Austausch von Daten zwischen dem jeweiligen Rechner (5, 15a, 25) und dem zusätzlichen Rechner (4) verwendete Übertragungsmedium dem zum Austausch von zur Aktualisierung bzw. zur Steuerung der Aktualisierung verwendeten Daten angegebenen Übertragungsmedium entspricht.

15. Datenkommunikationssystem (1) nach einem der vorhergehenden Ansprüche,
**dadurch gekennzeichnet,**
**dass** das zum Austausch von Daten zwischen dem jeweiligen Rechner (5, 15a, 25) und dem zusätzlichen Rechner (4) verwendete Übertragungsmedium separat durch den jeweiligen Rechner (5, 15a, 25) ermittelt wird, und sich von dem zum Austausch von zur Aktualisierung bzw. zur Steuerung der Aktualisierung verwendeten Daten angegebenen Übertragungsmedium unterscheiden kann.

16. Datenkommunikationssystem (1) nach einem der vorhergehenden Ansprüche,
**dadurch gekennzeichnet,**
**dass** die auf dem zusätzlichen Rechner (4) bzw. auf der diesem zugeordneten Speichereinrichtung (34) gespeicherte, zur Aktualisierung der Daten benötigte Datei über das angegebene bzw. separat ermittelte Übertragungsmedium an den jeweiligen Rechner (5, 15a, 25) übertragen wird.

17. Datenkommunikationssystem (1) nach einem der vorhergehenden Ansprüche,
**dadurch gekennzeichnet,**
**dass** der Rechner (5, 15a, 25) eine Telekommunikationsanlage ist.

18. Datenkommunikationssystem (1) nach Anspruch 17,
**dadurch gekennzeichnet,**
**dass** die zu aktualisierenden Daten eine Kommunikations-Steuerungs-Software ist.

19. Datenkommunikationssystem (1) nach Anspruch 17 oder 18,
**dadurch gekennzeichnet,**
**dass** der Rechner (5, 15a, 25) Teil eines Datennetzwerks (A, B, C) ist und als zentraler Rechner (5, 15a, 25) für das Datennetzwerk (A, B, C) fungiert.

20. Datenkommunikationssystem (1) nach Anspruch 19,
**dadurch gekennzeichnet,**
**dass** das Datennetzwerk (A, B, C) an mindestens ein weiteres Datennetzwerk (A, B, C) angeschlossen ist, so dass ein Netzwerkverbund entsteht, und der jeweilige Rechner (5, 15a, 25) eine Aktualisierung von auf einem Rechner (5a, 5b) des weiteren Datennetzwerks (A, B, C) bzw. einer diesem zugeordneten Speichereinrichtung (8a, 8b) gespeicherter Daten veranlasst.

21. Rechner (5, 15a, 25), welcher so ausgestaltet und eingerichtet ist, dass er als Rechner (5, 15a, 25) in einem Datenkommunikationssystem (1) nach einem der Ansprüche 1 bis 21 verwendbar ist, und
welcher so ausgestaltet und eingerichtet ist,
dass er ermittelt, welches Übertragungsmedium zum Austausch der zur Aktualisierung bzw. zur Steuerung der Aktualisierung verwendeten Daten verwendet werden soll, und
nachfolgend über das zu verwendende Übertragungsmedium eine Verbindung mit einem zusätzlichen Server-Rechner (4) aufbaut, wobei auf dem zusätzlichen Server-Rechner (4), bzw. auf einer diesem zugeordneten Speichereinrichtung (34) mindestens eine Datei gespeichert ist, die zur Aktualisierung der Daten benötigt wird.

22. Verfahren zur Aktualisierung von auf einem Rechner (5, 15a, 25) eines Datenkommunikationssystems (1) bzw. einer diesem zugeordneten Speichereinrichtung (8, 18, 28) gespeicherter Software, wobei das Datenkommunikationssystem (1) zusätzlich einen Administrations-Rechner (31) und einen Server-Rechner (4) aufweist,
wobei vor der Aktualisierung der auf dem Rechner (5, 15a, 25) bzw. der diesem zugeordneten Speichereinrichtung (8, 18, 28) gespeicherten Software Daten zwischen dem Rechner (5, 15a, 25) und dem Administrations-Rechner (31) ausgetauscht werden, die angeben, welches Übertragungsmedium zum Austausch von zur Aktualisierung bzw. zur Steuerung der Aktualisierung verwendeten Daten verwendet werden soll, **dadurch gekennzeichnet dass** nachfolgend über das zu verwendende Übertragungsmedium eine Verbindung zwischen dem jeweiligen Rechner (5, 15a, 25) und dem zusätzlichen Server-Rechner (4) aufgebaut wird, wobei auf dem zusätzlichen Server-Rechner (4), bzw. auf einer diesem zugeordneten Speichereinrichtung (34) mindestens eine Datei gespeichert ist, die zur Aktualisierung der Daten benötigt wird.

## Claims

1. Data communication system (1) having a plurality of computers (5, 15a, 25), an administrative computer (31) and an additional server computer (4),
wherein the computers and the administration computer are designed and set up in such a way that, prior to the updating of software stored on one of the computers (5, 15a, 25) or, as the case may be, on a storage device (8, 18, 28) assigned thereto, data indicating which transmission medium is to be used for exchanging data used for updating or, as the case may be, for controlling the updating process is exchanged between the relevant computer (5, 15a, 25) and the administrative computer (31),
**characterised in that** the computers and the additional server computers are designed and set up in such a way that a connection is subsequently set up between the relevant computer (5, 15a, 25) and the additional server computer (4) over the transmission medium that is to be used, and that at least one file required for updating the data has been stored on the additional server computer (4) or, as the case may be, on a storage device (34) assigned thereto.

2. Data communication system (1) according to claim 1
**characterised in that** the data specifying which transmission medium is to be used for exchanging data used for updating or, as the case may be, for controlling the updating process is exchanged over a predetermined transmission medium which can differ from the transmission medium specified.

3. Data communication system (1) according to claim 2
**characterised in that** the predetermined transmission medium is a telephone connection set up between the administrative computer (31) and the relevant computer (5, 15a, 25).

4. Data communication system (1) according to one of the preceding claims
**characterised in that** the specified transmission medium is an internet connection.

5. Data communication system (1) according to claim 4
**characterised in that** the specified transmission medium is a fixed internet connection and **in that** the IP address assigned to the relevant computer (5, 15a, 25) is a fixed IP address permanently assigned to the relevant computer (5, 15a, 25).

6. Data communication system (1) according to claim 4
**characterised in that** the specified transmission medium is a temporary internet connection and **in that** the IP address assigned to the relevant computer (5, 15a, 25) is a temporary IP address not permanently assigned to the relevant computer (5, 15a, 25).

7. Data communication system (1) according to one of the preceding claims
**characterised in that** the specified transmission medium is a telephone connection.

8. Data communication system (1) according to one of the preceding claims
**characterised in that** it is ascertained by the relevant computer (5, 15a, 25) which transmission medium is to be used for exchanging data used for updating or, as the case may be, for controlling the updating process.

9. Data communication system (1) according to one of the preceding claims
**characterised in that** the additional server computer (4) is a TFTP server computer or a web server computer.

10. Data communication system (1) according to one of the preceding claims
**characterised in that** software-updating control data is exchanged between the relevant computer (5, 15a, 25) and the administrative computer (31) over the predetermined or specified transmission medium.

11. Data communication system (1) according to claim 10
**characterised in that** the software-updating control data specifies the precise time at which updating is to be performed.

12. Data communication system (1) according to claim 10 or 11
**characterised in that** the software-updating control data specifies a call ID, in particular a telephone number or IP address or, as the case may be, URL address, assigned to the additional server computer (4).

13. Data communication system (1) according to one of claims 10 to 12
**characterised in that** it is conveyed with the aid of the software-updating control data which transmission medium is to be used for exchanging data between the relevant computer (5, 15a, 25) and the additional computer (4).

14. Data communication system (1) according to one of the preceding claims
**characterised in that** the transmission medium used for exchanging data between the relevant computer (5, 15a, 25) and the additional computer (4) corresponds to the transmission medium specified for exchanging data used for updating or, as the case may be, for controlling the updating process.

15. Data communication system (1) according to one of the preceding claims
**characterised in that** the transmission medium used for exchanging data between the relevant computer (5, 15a, 25) and the additional computer (4) is ascertained separately by the relevant computer (5, 15a, 25) and can differ from the transmission medium specified for exchanging data used for updating or, as the case may be, for controlling the updating process.

16. Data communication system (1) according to one of the preceding claims
**characterised in that** the file which is required for updating the data and stored on the additional computer (4) or, as the case may be, on the storage device (34) assigned thereto is transmitted to the relevant computer (5, 15a, 25) over the specified or, as the case may be, separately ascertained transmission medium.

17. Data communication system (1) according to one of the preceding claims
**characterised in that** the computer (5, 15a, 25) is a PBX.

18. Data communication system (1) according to claim 17
**characterised in that** the data to be updated is communication-control software.

19. Data communication system (1) according to claim 17 or 18
**characterised in that** the computer (5, 15a, 25) is part of a data network (A, B, C) and operates as a central computer (5, 15a, 25) for the data network (A, B, C).

20. Data communication system (1) according to claim 19
**characterised in that** the data network (A, B, C) is connected to at least one other data network (A, B, C) so that an aggregate network is formed, and **in that** the relevant computer (5, 15a, 25) initiates updating of data stored on a computer (5a, 5b) of the other data network (A, B, C) or, as the case may be, on a storage device (8a, 8b) assigned thereto.

21. Computer (5, 15a, 25) designed and set up in such a way that it can be used as a computer (5, 15a, 25) in a data communication system (1) according to one of claims 1 to 21 and
designed and set up in such a way
that it ascertains which transmission medium is to be used for exchanging the data used for updating or, as the case may be, for controlling the updating process and
a connection is subsequently set up with an additional server computer (4) over the transmission medium that is to be used, at least one file required for updating the data being stored on the additional server computer (4) or, as the case may be, on a storage device (34) assigned thereto.

22. Method for updating software stored on a computer (5, 15a, 25) of a data communication system (1) or, as the case may be, on a storage device (8, 18, 28) assigned thereto, the data communication system (1) additionally having an administrative computer (31) and a server computer (4),
wherein prior to the updating of the software stored on the computer (5, 15a, 25) or, as the case may be, on the storage device (8, 18, 28) assigned thereto, data specifying which transmission medium is to be used for exchanging data used for updating or, as the case may be, for controlling the updating process is exchanged between the computer (5, 15a, 25) and the administrative computer (31),
**characterised in that** a connection is subsequently set up between the relevant computer (5, 15a, 25) and the additional server computer (4) over the transmission medium that is to be used, at least one file required for updating the data being stored on the additional server computer (4) or, as the case may be, on a storage device (34) assigned thereto.

## Revendications

1. Système de communication de données (1) comprenant plusieurs ordinateurs (5, 15a, 25), un ordinateur d'administration (31) et un ordinateur serveur supplémentaire (4), les ordinateurs et l'ordinateur d'administration étant réalisés et configurés de manière telle que, avant la mise à jour d'un logiciel stocké sur l'un des ordinateurs (5, 15a, 25) resp. sur un dispositif de mémoire (8, 18, 28) qui y est associé, des données sont échangées entre l'ordinateur respectif (5, 15a, 25) et l'ordinateur d'administration (31), lesquelles indiquent le médium de transmission à utiliser pour l'échange de données utilisées aux fins de la mise à jour resp. aux fins de la commande de la mise à jour, **caractérisé en ce que** les ordinateurs et l'ordinateur serveur supplémentaire sont réalisés et configurés de manière telle que, ensuite, une liaison est établie entre l'ordinateur respectif (5, 15a, 25) et l'ordinateur serveur supplémentaire (4) via le médium de transmission à utiliser et **en ce qu'**au moins un fichier requis pour la mise à jour des données est stocké sur l'ordinateur serveur supplémentaire (4) resp. sur un dispositif de mémoire (34) qui y est associé.

2. Système de communication de données (1) selon la revendication 1, **caractérisé en ce que** les données qui indiquent le médium de transmission à utiliser pour l'échange de données utilisées aux fins de la mise à jour resp. aux fins de la commande de la mise à jour sont échangées via un médium de transmission prédéterminé qui peut être différent du médium de transmission indiqué.

3. Système de communication de données (1) selon la revendication 2, **caractérisé en ce que** le médium de transmission prédéterminé est une liaison téléphonique établie entre l'ordinateur d'administration (31) et l'ordinateur respectif (5, 15a, 25).

4. Système de communication de données (1) selon l'une des revendications précédentes, **caractérisé en ce que** le médium de transmission indiqué est une liaison Internet.

5. Système de communication de données (1) selon la revendication 4, **caractérisé en ce que** le médium de transmission indiqué est une liaison Internet fixe et l'adresse IP affectée à l'ordinateur respectif (5, 15a, 25) est une adresse IP permanente attribuée fixement à l'ordinateur respectif (5, 15a, 25).

6. Système de communication de données (1) selon la revendication 4, **caractérisé en ce que** le médium de transmission indiqué est une liaison Internet temporaire et l'adresse IP affectée à l'ordinateur respectif (5, 15a, 25) est une adresse IP temporaire attribuée non fixement à l'ordinateur respectif (5, 15a, 25).

7. Système de communication de données (1) selon l'une des revendications précédentes, **caractérisé en ce que** le médium de transmission indiqué est une liaison téléphonique.

8. Système de communication de données (1) selon l'une des revendications précédentes, **caractérisé en ce que** l'ordinateur respectif (5, 15a, 25) détermine le médium de transmission à utiliser pour l'échange des données utilisées aux fins de la mise à jour resp. aux fins de la commande de la mise à jour.

9. Système de communication de données (1) selon l'une des revendications précédentes, **caractérisé en ce que** l'ordinateur serveur supplémentaire (4) est un ordinateur serveur TFTP ou un ordinateur serveur Web.

10. Système de communication de données (1) selon l'une des revendications précédentes, **caractérisé en ce que** des données de commande de mise à jour de logiciels sont échangées entre l'ordinateur respectif (5, 15a, 25) et l'ordinateur d'administration (31) via le médium de transmission prédéterminé ou le médium de transmission indiqué.

11. Système de communication de données (1) selon la revendication 10, **caractérisé en ce que** les données de commande de mise à jour de logiciels indiquent l'instant exact auquel la mise à jour doit être opérée.

12. Système de communication de données (1) selon la revendication 10 ou 11, **caractérisé en ce que** les données de commande de mise à jour de logiciels indiquent un identifiant d'appel affecté à l'ordinateur serveur supplémentaire (4), en particulier un numéro de téléphone ou une adresse IP resp. URL.

13. Système de communication de données (1) selon l'une des revendications 10 à 12, **caractérisé en ce qu'**il est déterminé, à l'aide des données de commande de mise à jour de logiciels, quel médium de transmission doit être utilisé pour échanger des données entre l'ordinateur respectif (5, 15a, 25) et l'ordinateur supplémentaire (4).

14. Système de communication de données (1) selon l'une des revendications précédentes, **caractérisé en ce que** le médium de transmission utilisé pour l'échange de données entre l'ordinateur respectif (5, 15a, 25) et l'ordinateur supplémentaire (4) correspond au médium de transmission indiqué pour l'échange de données utilisées aux fins de la mise à jour resp. aux fins de la commande de la mise à jour.

15. Système de communication de données (1) selon l'une des revendications précédentes, **caractérisé en ce que** le médium de transmission utilisé pour l'échange de données entre l'ordinateur respectif (5, 15a, 25) et l'ordinateur supplémentaire (4) est déterminé séparément par l'ordinateur respectif (5, 15a, 25) et peut être différent du médium de transmission indiqué pour l'échange de données utilisées aux fins de la mise à jour resp. aux fins de la commande de la mise à jour.

16. Système de communication de données (1) selon l'une des revendications précédentes, **caractérisé en ce que** le fichier stocké sur l'ordinateur supplémentaire (4) resp. sur le dispositif de mémoire (34) y associé, et requis pour la mise à jour des données, est transmis à l'ordinateur respectif (5, 15a, 25) via le médium de transmission indiqué resp. déterminé séparément.

17. Système de communication de données (1) selon l'une des revendications précédentes, **caractérisé en ce que** l'ordinateur (5, 15a, 25) est une installation de télécommunications.

18. Système de communication de données (1) selon la revendication 17, **caractérisé en ce que** les données à mettre à jour sont un logiciel de commande de communications.

19. Système de communication de données (1) selon la revendication 17 ou 18, **caractérisé en ce que** l'ordinateur (5, 15a, 25) fait partie d'un réseau de données (A, B, C) et fait office d'ordinateur central (5, 15a, 25) pour le réseau de données (A, B, C).

20. Système de communication de données (1) selon la revendication 19, **caractérisé en ce que** le réseau de données (A, B, C) est connecté à au moins un autre réseau de données (A, B, C) de sorte que se forme une interconnexion de réseaux et l'ordinateur respectif (5, 15a, 25) fait faire une mise à jour de données stockées sur un ordinateur (5a, 5b) de l'autre réseau de données (A, B, C) resp. sur un dispositif de mémoire (8a, 8b) qui y est associé.

21. Ordinateur (5, 15a, 25) qui est réalisé et configuré de manière à pouvoir être utilisé en tant qu'ordinateur (5, 15a, 25) dans un système de communication de données (1) selon l'une des revendications 1 à 21 et qui est réalisé et configuré de manière telle qu'il détermine le médium de transmission à utiliser pour l'échange des données utilisées aux fins de la mise à jour resp. aux fins de la commande de la mise à jour et qu'il établit ensuite une liaison avec un ordinateur serveur supplémentaire (4) via le médium de transmission à utiliser, au moins un fichier requis pour la mise à jour des données étant stocké sur l'ordinateur serveur supplémentaire (4) resp. sur un dispositif de mémoire (34) qui y est associé.

22. Procédé de mise à jour d'un logiciel stocké sur un ordinateur (5, 15a, 25) d'un système de communication de données (1) resp. sur un dispositif de mémoire (8, 18, 28) qui y est associé, le système de communication de données (1) comportant additionnellement un ordinateur d'administration (31) et un ordinateur serveur (4), des données étant échangées entre l'ordinateur (5, 15a, 25) et l'ordinateur d'administration (31) avant la mise à jour du logiciel stocké sur l'ordinateur (5, 15a, 25) resp. sur le dispositif de mémoire (8, 18, 28) qui y est associé, lesquelles données indiquent le médium de transmission à utiliser pour l'échange de données utilisées aux fins de la mise à jour resp. aux fins de la commande de la mise à jour, **caractérisé en ce qu'**ensuite une liaison est établie entre l'ordinateur respectif (5, 15a, 25) et l'ordinateur serveur supplémentaire (4) via le médium de transmission à utiliser, au moins un fichier requis pour la mise à jour des données étant stocké sur l'ordinateur serveur supplémentaire (4) resp. sur un dispositif de mémoire (34) qui y est associé.
